Europäisches Patentamt

European Patent Office

Office européen des brevets

(19)

(11) Veröffentlichungsnummer : **0 064 131**
**B1**

(12) **EUROPÄISCHE PATENTSCHRIFT**

(45) Veröffentlichungstag der Patentschrift :
24.04.85

(21) Anmeldenummer : 82101462.8

(22) Anmeldetag : 26.02.82

(51) Int. Cl.⁴ : **H 04 L 27/00**

(54) **Digitales Modulationsverfahren.**

(30) Priorität : 30.04.81 DE 3117134

(43) Veröffentlichungstag der Anmeldung :
10.11.82 Patentblatt 82/45

(45) Bekanntmachung des Hinweises auf die Patenterteilung : 24.04.85 Patentblatt 85/17

(84) Benannte Vertragsstaaten :
AT BE CH DE FR GB IT LI LU NL

(56) Entgegenhaltungen :
DE-B- 2 206 382
US-A- 3 845 412
US-A- 3 983 485
IEEE TRANSACTIONS ON COMMUNICATIONS Band COM-21, Nr. 10, Oktober 1973 New York M.K. SIMON et al. "Hexagonal multiple phase-and-amplitude-shift-keyed signal sets" Seiten 1108 bis 1115

(73) Patentinhaber : ANT Nachrichtentechnik GmbH
Gerberstrasse 33
D-7150 Backnang (DE)

(72) Erfinder : Weber, Herbert
Robert-Bosch-Strasse 1
D-7150 Backnang (DE)

(74) Vertreter : Schickle, Gerhard, Dipl.-Ing. et al
ANT Nachrichtentechnik GmbH Patent- und Lizenzabteilung Gerberstrasse 33
D-7150 Backnang (DE)

Jouve, 18, rue St-Denis, 75001 Paris, France

EP 0 064 131 B1

**Beschreibung**

Die vorliegende Erfindung betrifft ein digitales Modulationsverfahren mit Hilfe von Digitalsignalen einer k Bit Wortlänge (k = 1, 2, 3 ...), nach dem den $2^k$ möglichen Bitworten Modulationssignale mit bestimmten Amplituden und Phasenlagen zugeordnet werden, wobei diese Modulationssignale durch Kombination dreier um 120° gegeneinander phasenversetzter und in ihrer Amplitude gewichteter Trägerschwingungen konstanter Frequenz gebildet werden, wobei als Modulationssignale nur solche benutzt werden, deren Vektoren die 360° Phasenebene in gleichgroße Winkelabschnitte aufteilen, und zusätzlich ein pegelloses Null-Signal als Modulationssignal benutzt wird.

Ein solches Verfahren ist aus der IEEE Transactions on Communications, Vol. COM-21, No. 10, October 1973, Seite 1108-1115 bekannt.

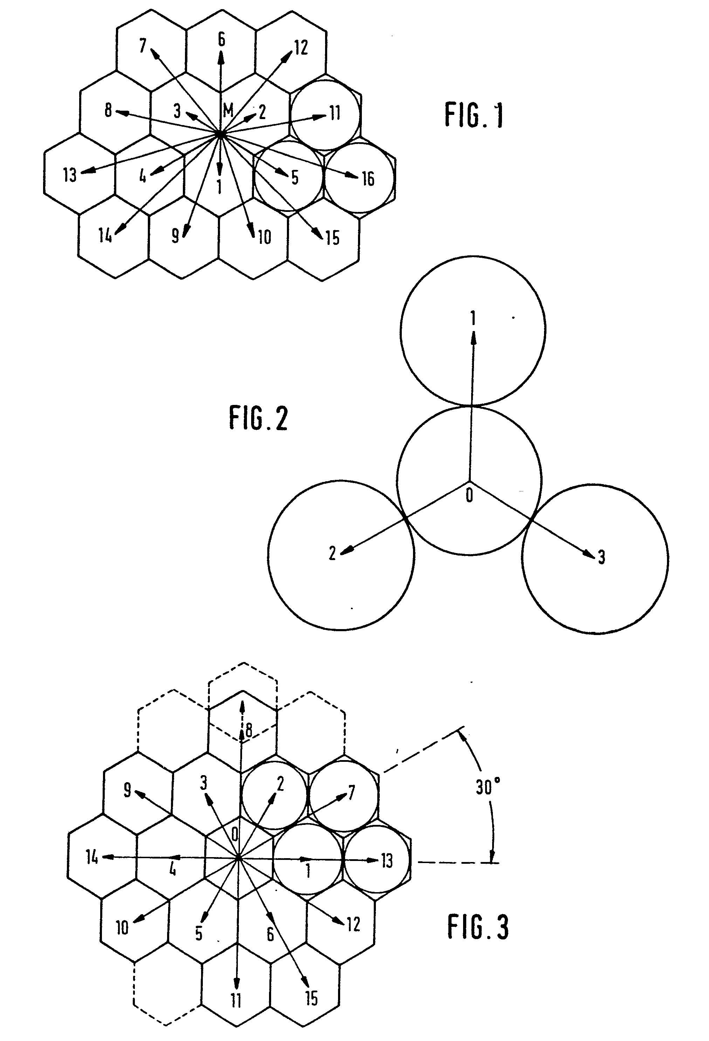

Aus der DE-PS 2 206 382 ist ein digitales Modulationsverfahren bekannt, bei dem Digitalsignale, vor allem solche, deren Bitwortlängen größer als zwei sind, zur Modulation eines Trägersignals herangezogen werden. Das Ziel dabei ist es, das Trägersignal so zu modulieren, daß es gegen Störungen auf der Übertragungsstrecke möglichst unanfällig ist, um im Empfänger aus dem modulierten Trägersignal fehlerfrei das ursprüngliche Datensignal wiedergewinnen zu können. Bei Wortlängen des Digitalsignals von 2 und vielleicht auch noch von 3 Bit reicht es aus, das Trägersignal mit konstanter Amplitude nur in seiner Phase zu modulieren. Der reinen Phasenmodulation sind sehr schnell Grenzen gesetzt, da bei zunehmender Anzahl möglicher Bitworte die Phasendifferenz zwischen den diesen Bitworten zugeordneten Signalen abnimmt. Bei zu kleinen Phasendifferenzen besteht leicht die Gefahr, daß ein Signal schon bei kleineren Phasenschwankungen die Phase seines phasenmässig benachbarten Signals annimmt. Daher geht man, um auch eine möglichst störunempfindliche Modulation mit höherwertigen Datensignalen verwirklichen zu können, zu der Phasen-Amplitudenmodulation über, d. h., die den möglichen Bitworten zugeordneten Signale unterscheiden sich in der Phase und/oder der Amplitude. Die Wahl der Phasen- und Amplitudendifferenzen zwischen den einzelnen Signalen sollte nun so getroffen werden, daß übliche bei der Signalübertragung auftretende Störungen, wie Rauschen, Phasenverschiebungen, Amplitudenschräglagen, Mehrwegeausbreitung und dergleichen, die Signalamplituden und -phasen nicht so stark stören, daß Übergänge zwischen verschiedenen Signalzuständen erfolgen. Die eingangs genannte Schrift DE-PS 2 206 382 gibt ein Modulationsverfahren, basierend auf der Phasen-Amplitudenmodulation an, das gegenüber hergebrachten Verfahren (z. B. Quadraturamplitudenmodulation QAM) einen größeren Störabstand besitzt. Im Gegensatz zur QAM, bei der die verschiedenen Signalzustände durch die von den Bitworten gesteuerten Kombination zweier um 90° gegeneinander phasenverschobener und in ihrer Amplitude entsprechend gewichteter Trägersignale entstehen, werden nach dem in der DE-PS 2 206 382 beschriebenen Verfahren drei um 120° gegeneinander phasenverschobene und amplitudengewichtete Trägerschwingungen miteinander kombiniert; und zwar werden nach diesem Verfahren die Signalvektoren bezüglich ihrer Amplitude und Phase so gewählt, daß ihre Enden in den Mittelpunkten gleichgroßer regelmäßiger Sechsecke liegen, die in der Phasenebene ohne Zwischenräume wabenartig um den Vektorursprung M angeordnet sind (vgl. Fig. 1).

Die in der Fig. 1 dargestellte Phasenebene läßt erkennen, daß die Winkel zwischen einigen Signalvektoren, z. B. zwischen den Vektoren 1 und 11 oder 5 und 15 etc., recht klein sind, wodurch zwischen diesen Vektoren durch Phasenverschiebungen leicht Übergänge stattfinden können. Bezüglich Phasenverschiebungen ist daher dieses Modulationsverfahren noch ziemlich störanfällig. Außerdem ist für die Demodulation die ungleichmäßige Winkelaufteilung der Phasenebene durch die Vektoren ungünstig, da der Demodulator in der Lage sein muß, mehrere sehr unterschiedliche Phasenzustände exakt erkennen zu können. Wird wie hier die eindeutige Feststellung der Phasenzustände erschwert, erhöht sich die Fehlerwahrscheinlichkeit bei der Demodulation.

Eine Verbesserung bezüglich der Fehlerwahrscheinlichkeit des in der DE-PS 2 206 382 beschriebenen Verfahrens bringt das einleitend dargelegte, aus der IEEE Transactions on Communications, Vol. COM-21, No. 10, October 1973, Seite 1108-1115 bekannte digitale Modulationsverfahren. Nach diesem Verfahren werden ebenfalls die Modulationssignale durch Kombination dreier um 120° gegeneinander phasenversetzter und in ihrer Amplitude gewichteter Trägerschwingungen gebildet. Dadurch, daß hierbei als Modulationssignale nur solche benutzt werden, deren Vektoren die 360° Phasenebene in gleichgroße Winkelabschnitte aufteilen, und zusätzlich ein pegelloses Null-Signal als Modulationssignal, dem ein Bitwort zugeordnet ist, benutzt wird, vergrößern sich die Abstände zwischen den einzelnen Vektoren der Modulationssignale und damit auch ihre Störanfälligkeit.

Der Erfindung liegt nun die Aufgabe zugrunde, ein digitales Modulationsverfahren der eingangs genannten Art anzugeben, das gegenüber dem Stand der Technik eine weitere Verbesserung bezüglich der Störanfälligkeit bringt und das eine möglichst fehlerfreie Wiedererkennung der modulierten Signale gewährleistet.

Diese Aufgabe wird erfindungsgemäß dadurch gelöst, daß bei der Modulation von Datensignalen, deren Wortlänge größer als zwei Bit ist, dem Null-Signal mehrere sich in mindestens drei Bitstellen unterscheidende Bitwort zugeordnet werden und daß in dem Zeitraum, in dem ein Bitwort seriell moduliert wird, zusammen mit dem zu diesem Bitwort gehörenden Modulationssignal zwei weitere redundante Modulationssignale übertragen werden, welche aus zwei Bitworten gebildet werden, die aus dem wahren Bitwort abgeleitet und so kodiert werden, daß bei der Demodulation auf den redundanten Modulationssignalen fehlerfrei ermittelt werden kann welches wahre Bitwort übertragen worden ist.

Zweckmäßige Ausführungen des erfindungsgemäßen Verfahrens gehen aus den Unteransprüchen hervor.

Dadurch, daß auch das Signal mit dem Pegel Null einem oder sogar besser noch mehreren Bitworten zugeordnet wird, erniedrigt sich gegenüber den nach dem anfangs erwähnten Verfahren erzeugten Modulationssignal dessen mittlere Leistung, sofern alle Signalzustände gleich häufig übertragen werden. Dies erweist sich besonders dann als vorteilhaft, wenn die Forderung nach einer möglichst geringen mittleren Signalleistung besteht.

Anhand von in der Zeichnung dargestellten Ausführungsbeispielen wird nun die Erfindung näher erläutert. Es zeigen :

Figur 1 eine Signalvektorverteilung in der Phasenebene für 16 Bitworte nach dem Stand der Technik,

Figur 2 eine Signalvektorverteilung in der Phasenebene für 4 Bitworte,

Figur 3 eine für 16 Bitworte,

Figur 4 eine Signalvektorverteilung für 8 Bitworte, wobei dem Null-Vektor zwei verschiedene Bitworte zugeordnet sind und

Figur 5 für diesen Fall ein Diagramm, nach der Erfindung, welches die Zuordnung, der Bitworte zu den Modulationssignalen verdeutlicht.

Auf die Fig. 1 wurde bereits im Zusammenhang mit der Beschreibung des Standes der Technik hingewiesen. Die dort in die Phasenebene eingezeichneten regelmäßigen gleichgroßen Sechsecke stellen ein Hilfsmittel für die Konstruktion der Signalvektoren dar. Es ergeben sich, wenn man die Vektoren 1 bis 16 in den Mittelpunkten dieser Sechsecke enden läßt, recht günstige Störabstände zwischen den Vektoren.

Die Fig. 2 zeigt ein sehr einfaches Vektorsystem für ein Datensignal mit vier 2-Bitworten ; und zwar sind hier gemäß der Erfindung einem Bitwort das Signal 0, welches keinen Pegel und natürlich auch keinen definierten Phasenzustand besitzt, und den restlichen drei Bitworten Signale zugeordnet, deren Vektoren 1, 2 und 3 gleiche Amplituden und Phasendifferenzen von 120° aufweisen. Um die Vektoren sind sogenannte Störkreise eingezeichnet. Sie grenzen den Bereich ab, in dem ein Störspannungsvektor um die Spitzen der Signalvektoren 0, 1, 2, 3 rotieren kann, ohne daß durch die Überlagerung der Störspannung ein Signalzustand in einen anderen verfälscht wird, Dies bedeutet, daß bei einer Signalverfälschung, verursacht durch Rauschen, Phasenverschiebungen, Amplitudenschräglagen oder Mehrwegeempfang im Funkfeld, der Demodulator den ursprünglichen Signalzustand dann noch richtig erkennt, solange sich die Vektorspitze aus dem zugehörigen Störkreis nicht herausbewegt. Je weiter die Störkreise auseinander liegen, desto geringer ist die Wahrscheinlichkeit, daß ein Signalzustand in einen anderen verfälscht wird.

Da bei dem System in Fig. 2 auch das Null-Signal ausgenutzt wird, was durch die Überlagerung der drei um 120° gegeneinander phasenverschobenen Trägerschwingungen gleicher Amplitude erzeugt oder durch Aussenden keiner der drei Trägerschwingungen realisiert wird, können die anderen drei Signale phasenmäßig sehr weit (nämlich um 120°) auseinanderrücken, wodurch sich ein optimaler Störabstand zwischen den Signalen ergibt. Die in der Fig. 2 eingezeichneten Signalvektoren 1, 2 und 3 haben die gleiche Länge. Es ist auch möglich, drei unterschiedlich lange Vektoren aus der Kombination verschieden stark gewichteter Trägerschwingungen zu bilden. Dies bietet sich für den Extremfall bei dem 3-Phasensystem an, wenn bei sehr starken Phasenstörungen die Phasendifferenz von 120° nicht ausreicht, um die Signalzustände eindeutig im Empfänger wiederzuerkennen, Die gestuften Signalamplituden bieten dann ein weiteres Kriterium zur Unterscheidung der Signale.

In der Fig. 3 ist nun ein Vektorsystem dargestellt für ein Datensignal mit sechzehn 4-Bitworten. Auch hier wird wieder das Null-Signal 0 ausgenutzt. Allerdings wird bei diesem Ausführungsbeispiel dem Null-Signal nur ein Bitwort zugeordnet. Es ergibt sich eine ideale Verteilung der Signalvektoren in der Phasenebene, wenn wie beim bekannten Modulationsverfahren gemäß Fig. 1 jedes Vektorenende in den Mittelpunkt eines regelmäßigen Sechseckes gelegt wird. Um ein mittleres Sechseck, dessen Mittelpunkt mit dem Vektor des Null-Signals, der gleichzeitig der Ursprungspunkt 0 der Vektoren 1 bis 15 ist, zusammenfällt, scharen sich die anderen Sechsecke.

Diese Sechseckkonfiguration bringt es mit sich, daß die zugehörigen Vektoren die 360° Phasenebene in gleiche Winkelabschnitte aufteilen. Jeder Vektor schließt also mit seinen beiden benachbarten Vektoren einen Winkel von 30° ein. Man erhält Modulationssignale, die aufgrund optimal großer und äquidistenter Phasenabstände mit einer sehr geringen Fehlerwahrscheinlichkeit demoduliert werden können ; sollte bei sehr stark auftretenden Störungen der Amplitudenabstand zwischen den Signalen bei der in Fig. 3 gezeigten dichtesten Sechseckanordnung nicht ausreichen, so können die Sechsecke 8, 9, 10, 11, 12, 13, 14 und 15 des äußeren Sechseckringes weiter vom Ursprungspunkt 0 entfernt werden, was einer Verlängerung der in den Mittelpunkten dieser Sechsecke endenden Vektoren gleichkommt.

Das als Konstruktionshilfe gedachte Sechsecksystem läßt sich, wie die punktierten Sechsecke in Fig. 3 andeuten, für weitere Signalzustände vergrößern.

Um den Demodulator auf eine feste Bezugsphase zu synchronisieren und auch die Verstärkung auf der Demodulator-Seite einzustellen, kann in bestimmten Zeitabständen einem Modulationssignal einer definierten Phase in Impuls überlagert werden. In dem Ausführungsbeispiel ist das das Modulationssignal 8. Der zugehörige Vektor erfährt dadurch kurzzeitig eine Verlängerung, was in der Fig. 3 strichliert angedeutet ist.

An einem einfachen Ausführungsbeispiel für dreiwertige Bitworte eines Digitalsignals soll nun gezeigt werden, daß dem Nullsignal auch mehr alls nur ein Bitwort zugeordnet werden kann. Dies hat zur Folge, daß weniger Signalzustände mit einer von Null verschiedenen Amplitude notwendig sind, um alle Bitworte darzustellen. Es ergibt sich daraus, daß weniger Vektoren in der 360° Phasenebene verteilt werden müssen. Die Phasenabstände zwischen den Vektoren können also weiter vergrößert werden. Auf den Vorteil möglichst großer Phasenabstände wurde bereits oben hingewiesen.

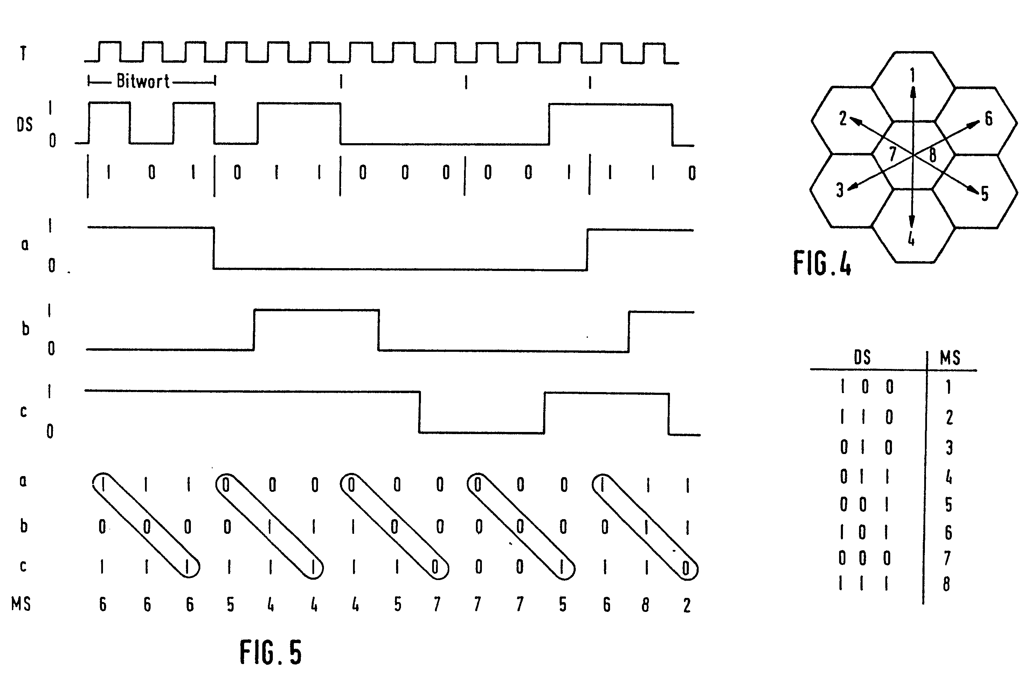

Die Fig. 4 zeigt die Phasenebene mit den Vektoren der Modulationssignale 1 bis 8 für Digitalsignale mit 3 Bit Wortlänge. Aus der Tabelle unterhalb der Fig. 4 geht die Zuordnung der 8 möglichen Bitworte zu den Modulationssignalen 1 bis 8 hervor. In der Phasenebene liegen 6 Vektoren, nämlich die der Modulationssignale 1 bis 6, welche gegenüber ihren benachbarten Vektoren jeweils einen Phasenabstand von 60° aufweisen. Die restlichen beiden Bitworte 000 und 111 sind dem Null-Signal zugeordnet. Damit bei der Demodulation erkannt werden kann, welches der beiden Bitworte einem übertragenen Null-Signal zugeordnet worden ist, müssen noch zusätzliche Informationen übertragen werden, aus denen ableitbar ist, ob das Bitwort 000 oder das Bitwort 111 durch das Null-Signal übermittelt worden ist.

Die zusätzlichen Informationen liefern zwei redundante Bitworte, die ebenfalls moduliert und zusammen mit jedem modulierten Bitwort des zu übermittelnden Datensignals übertragen werden.

Die Bildung geeigneter redundanter Bitworte verdeutlicht das Impulsdiagramm in Fig. 5. Mit T ist das Taktsignal für den Modulator bezeichnet. Es ist ein beliebiges zu modulierendes Datensignal DS gewählt worden, dessen dreiwertige Bitworte 101, 011, 000, 001 und 110 sind. Die Bezeichnungen a, b und c stehen für die drei um 120° gegeneinander phasenverschobenen Trägerschwingungen, durch deren Kombination sich ja die gewünschten Modulationssignale erzeugen lassen. Liegt eine 1 bei a, b oder c an, so bedeutet das, daß die zugehörige Trägerschwingung mit zur Bildung des Modulationssignals herangezogen wird. Liegt eine 0 bei a, b oder c an, so ist die zugehörige Trägerschwingung am resultierenden Modulationssignal unbeteiligt. Das Datensignal wird seriell dem Modulator zugeführt. Dabei bestimmt jeweils das erste Bit eines Wortes, ob die Trägerschwingung a (mit Phase 0°), das zweite Bit, ob die Trägerschwingung b (mit Phase 120°), und das dritte Bit, ob die Trägerschwingung c (mit Phase 240°) zur Modulation beiträgt. Das Digitalsignal DS wird seriell dem Modulator zugeführt, d. h., die Einstellung der Größen a, b und c erfolgt zeitlich hintereinander. Die Wertetabelle für a, b und c im unteren Teil der Fig. 5 verdeutlicht diesen Vorgang (siehe eingerahmte Bitwerte von a, b und c). Mit dem ersten Bit eines Wortes wird a auf den von dem Bit vorgegebenen Wert gebracht, mit dem zweiten Bit wird darauf b und mit dem dritten Bit schließlich c auf den entsprechenden Bitwert gesetzt. Am Ende eines Datensignalwortes besitzen a, b und c die dem Wort entsprechenden Zustände 1 oder 0, so daß durch Kombination der drei Trägerschwingungen gemäß den Zuständen von, a, b und c das dem Datensignalwort zugeordnete Modulationssignal entsteht.

Es ist allgemein üblich, nur das endgültige dem Datensignalwort zugeordnete Modulationssignal zu übertragen. Dieses kann dann eine Impulslänge besitzen, die der Zeit entspricht, die ein seriell an den Modulator gelegtes Datensignalwort braucht, um a, b und c auf die richtigen Zustände einzustellen. Dieser Zeitraum soll aber nun ausgenutzt werden nicht nur für die Übertragung des einen Modulationssignals sondern zweier weiterer redundanter Modulationssignale. Die beiden redundanten Modulationssignale gehen auf zwei Bitworte zurück, von denen das erste sich vom anschließenden zweiten, und das zweite sich von dem darauf folgenden wahren Datensignalwort allenfalls in einer Bitstelle unterscheidet. Dies erreicht man dadurch, daß die Zustände von a, b und c zwischen zwei durch das Datensignal bewirkten Änderungen erhalten bleiben. Man vergleiche hierzu die Wertetabelle für a, b und c im unteren Teil der Fig. 5. Mit Hilfe dieser zwei als Modulationssignale übertragenen, redundanten Bitworte kann im Empfänger festgestellt werden, ob einem übermittelten Null-Signal das Bitwort 000 oder das Bitwort 111 im Modulator zugeordnet worden ist. Ist nämlich das vorausgegangene redundante Bitwort 000, 100, 010 oder 001 gewesen, lag dem Null-Signal das Bitwort 000 zugrunde, weil aus diesen drei redundanten Bitworten bei Änderung allenfalls einer Bitstelle nur das Wort 000 resultieren kann. In gleicher Weise ist dem Null-Signal sicher das Bitwort 111 zugeordnet worden, wenn das voraufgegangene redundante Bitwort 111, 011, 101 oder 110 gewesen ist. Statt der voraufgegangenen redundanten Bitworte können auch die nachfolgenden redundanten Bitworte zur Beurteilung des Null-Signals herangezogen werden. Außerdem werden die beiden redundanten Bitworte bei allen anderen übertragenen Datensignalen zur Fehlererkennung herangezogen. Unter Umständen ist mittels der redundanten Bitworte auch eine Fehlerkorrektur möglich.

Es ist weiterhin möglich, bei den beiden redundanten Bitworten eine andere aufwendigere Codierung vorzunehmen, die ein sehr sicheres Fehlererkennen und -korrigieren zuläßt.

Da nach dem obigen Verfahren in dem gleichen Zeitraum, der üblicherweise nur für die Übertragung des einen dem Datensignal zugeordneten Modulationssignals zur Verfügung steht, nun zusätzlich zwei weitere Modulationssignale übertragene werden müssen, sind die drei Modulationssignale in einer ganz bestimmten Weise aufeinander abzustimmen. Und zwar werden die drei Modulationssignale bezüglich ihrer Einhüllenden um 120° gegeneinander phasenversetzt übertragen. Als Einhüllende jedes Modulationssignals dient nur noch die Sinus- bzw. Kosinusgrundwelle, die durch Unterdrückung sämtlicher Oberwellen der sonst rechteckförmigen Einhüllenden gewonnen wird. Nach diesem Verfahren ist vorteilhafterweise keine größere Bandbreite des Übertragungskanals erforderlich, als für die Übertragung eines Modulationssignals mit einer rechteckigen Einhüllenden, deren Breite dem Zeitraum für die serielle Abgabe eines Datensignalwortes an den Modulator entspricht.

Das an dem Ausführungsbeispiel für $2^3 = 8$ Bitworte beschriebene Verfahren läßt sich selbstverständlich auch auf Digitalsignale mit höherwertigen Bitworten übertragen, z. B. können bei $2^4 = 16$ Bitworten dem Null-Signal schon vier verschiedene Bitworte zugeordnet werden. Es sollten nur solche Bitworte sein, die sich in mindestens drei Bitstellen voneinander unterscheiden.

## Patentansprüche

1. Digitales Modulationsverfahren mit Hilfe von Digitalsignalen einer k Bit Wortlänge (k = 1, 2, 3 ...), nach dem den $2^k$ möglichen Bitworten Modulationssignale mit bestimmten Amplituden und Phasenlagen zugeordnet werden, wobei diese Modulationssignale durch Kombination dreier um 120° gegeneinander phasenversetzter und in ihrer Amplitude gewichteter Trägerschwingungen konstanter Frequenz gebildet werden, wobei als Modulationssignale nur solche benutzt werden, deren Vektoren die 360° Phasenebene in gleichgroße Winkelabschnitte aufteilen, und zusätzlich ein pegelloses Null-Signal als Modulationssignal benutzt wird, dadurch gekennzeichnet, daß bei der Modulation von Datensignalen, deren Wortlänge größer als zwei Bit ist, dem Null-Signal mehrere sich in mindestens drei Bitstellen unterscheidende Bitworte zugeordnet werden und daß in dem Zeitraum, in dem ein Bitwort seriell moduliert wird, zusammen mi dem zu diesem Bitwort gehörenden Modulationssignal zwei weitere redundante Modulationssignale übertragen werden, welche aus zwei Bitworten gebildet werden, die aus dem wahren Bitwort abgeleitet und so kodiert werden, daß bei der Demodulation aus den redundanten Modulationssignalen fehlerfrei ermittelt werden kann, welches wahre Bitwort übertragen worden ist.

2. Verfahren nach Anspruch 1, dadurch gekennzeichnet, daß bei der Modulation von dreiwertigen Bitworten dem Null-Signal das Bitwort 000, das durch Aussenden keiner der drei um 120° versetzten Trägerschwingungen gebildet wird, und das Bitwort 111 zugeordnet wird, welches durch Kombination aller drei Trägerschwingungen mit gleicher Amplitude gebildet wird.

3. Verfahren nach Anspruch 1, dadurch gekennzeichnet, daß die Einhüllenden der beiden redundanten Modulationssignale und des dem wahren Bitwort zugeordneten Modulationssignals um jeweils 120° gegeneinander phasenverschoben sind.

4. Verfahren nach Anspruch 3, dadurch gekennzeichnet, daß die Einhüllenden Sinus- bzw. Kosinuswellen sind.

## Claims

1. Digital modulation method with the aid of digital signals of a word length of k bits (k = 1, 2, 3 ...), according to which modulation signals of certain amplitudes and phase portions are associated with the $2^k$ possible bit words, wherein these modulation signals are formed by the combination of three carrier oscillations of constant frequency, which are displaced in phase through 120° one relative to the other and weighted in their amplitude, wherein only such are used as modulation signals, the vectors of which divide up to 360° phase plane into equally great angular portions, and a level-free zero signal is additionally used as modulation signal, characterised thereby, that several bit words differing in at least three bit places are associated with the zero signal in the modulation of data signals, the word length of which is greater than two bits and that in the time span, in which a bit word is modulated serially, two further redundant modulation signals are transmitted together with the modulation signal belonging to this bit word and are formed out of two bit words which are derived from the true bit word and so coded that it can be determined free of error from the redundant modulation signals during the demodulation, which true bit word has been transmitted.

2. Method according to claim 1, characterised thereby, that the bit word 000, which is formed by emission of one of the three carrier oscillations displaced through 120°, and the bit word 111, which is formed by combination of all three carrier oscillations at equal amplitude, are associated with the zero signal in the modulation of trivalent bit words.

3. Method according to claim 1, characterised thereby, that the envelopes of both the redundant modulation signals and of the modulation signal associated with the true bit word are displaced in phase through 120° each relative to the other.

4. Method according to claim 3, characterised thereby, that the envelopes are sine waves or cosine waves.

## Revendications

1. Procédé de modulation numérique à l'aide de signaux numériques à mots de k bits (k = 1, 2, 3 ...) et dans lequel des signaux modulants d'amplitude et phase données sont affectés aux $2^k$ mots bits possibles, lesdits signaux modulants étant formés par la combinaison de trois porteuses de fréquence constante, déphasées de 120° entre elles et d'amplitude pondérée, et seuls étant utilisés les signaux modulants dont les vecteurs divisent les 360° du plan de phase en secteurs angulaires égaux, ainsi qu'un signal 0 sans niveau ; ledit procédé étant caractérisé en ce que lors de la modulation de signaux de données à longueur de mots supérieure à 2 bits, plusieurs mots bits présentant trois rangs différents au moins sont affectés au signal 0 ; et pendant l'intervalle de temps de modulation sérielle d'un mot bits, le signal modulant correspondant à ce dernier est transmis avec deux autres signaux modulants redondants, formés par deux mots bits dérivés du mot bits réel et codés de façon à permettre lors de la démodulation des signaux modulants redondants d'identifier sans erreur le mot bits réel transmis.

2. Procédé selon revendication 1, caractérisé en ce que lors de la modulation de mots de trois bits, le mot bits 000, formé par l'émission d'aucune des trois porteuses déphasées de 120°, et le mot bis 111, formé par la combinaison des trois porteuses de même amplitude, sont affectés au signal 0.

3. Procédé selon revendication 1, caractérisé en ce que les enveloppes des deux signaux modulants redondants et celle du signal modulant affecté au mot bits réel sont déphasées de 120° entre elles.

4. Procédé selon revendication 3, caractérisé en ce que les enveloppes sont des courbes sinus ou cosinus.

FIG. 1

FIG. 2

FIG. 3

30°

0 064 131

T

DS

|— Bitwort —|

1 0 1 0 1 1 0 0 0 0 0 1 1 1 0

a

b

c

a    1 1 1    0 0 0    0 0 0    0 0 0    1 1 1
b    0 0 0    0 1 1    0 0 0    0 0 1    0 1 1
c    1 1 1    1 1 1    1 1 0    0 0 1    1 1 0

MS   6 6 6    5 4 4    4 5 7    7 7 5    6 8 2

**FIG. 5**

**FIG. 4**

| DS | | | MS |
|---|---|---|---|
| 1 | 0 | 0 | 1 |
| 1 | 1 | 0 | 2 |
| 0 | 1 | 0 | 3 |
| 0 | 1 | 1 | 4 |
| 0 | 0 | 1 | 5 |
| 1 | 0 | 1 | 6 |
| 0 | 0 | 0 | 7 |
| 1 | 1 | 1 | 8 |